# EUROPÄISCHE PATENTSCHRIFT

(11) **EP 0 605 804 B1**
(45) Veröffentlichungstag und Bekanntmachung des Hinweises auf die Patenterteilung: **20.08.1997**
(21) Anmeldenummer: 93119822.0
(22) Anmeldetag: 09.12.1993
(51) Int. Cl.: B29C 35/00

(54) **Vorrichtung zum wahlweisen Beaufschlagen von Formen für die Kunststoffverarbeitung mit einer Flüssigkeit oder einem unter Druck stehenden Gas**
Device for selectively introducing a liquid or a pressurized gas into moulds for the transformation of plastic materials
Dispositif pour introduire au choix un liquide ou un gaz sous pression dans des moules pour le travail des matières plastiques

(30) Priorität: 12.12.1992 DE 4242024
(43) Veröffentlichungstag der Anmeldung: 13.07.1994
(73) Patentinhaber: Delcroix, Jean-Louis, F-84600 Valréas (FR)
(72) Erfinder: Delcroix, Jean-Louis, F-84600 Valréas (FR)
(74) Vertreter: Rehders, Jochen, Dipl.-Ing.

(56) Entgegenhaltungen:
- EP-A- 0 499 139
- EP-A- 0 564 800
- DE-B- 1 296 333
- FR-A- 2 613 979
- PATENT ABSTRACTS OF JAPAN vol. 14, no. 350 (C-0744)27. Juli 1990 & JP-A-02 128 606 (HONDA MOTOR CO LTD) 17. Mai 1990

## Beschreibung

Die Erfindung betrifft eine Vorrichtung zum wahlweisen Beaufschlagen von einer oder mehreren Formen für die Kunststoffverarbeitung mit einer Flüssigkeit oder einem unter Druck stehenden Gas, wie z.B. aus der EP-A-0 499 139 bekannt.

Formen für die Kunststoffverarbeitung wie Spritzgießformen, Blasformen oder Extrusionsformen müssen in der Regel auf einer bestimmten Temperatur gehalten werden, die bei Spritzgieß- und Blasformen ein Abkühlen des eingeführten, plastifizierten Kunststoffs und damit dessen Verfestigung bewirkt, um das geformte Teil möglichst schnell aus der Form entnehmen zu können. Die Temperatur muß so hoch sein, daß der Kunststoff die Form vollständig ausfüllt und nicht vor dem vollständigen Ausfüllen der Form "einfriert". Beim Extrudieren muß die Extrusionsform in der Regel geheizt werden, um den extrudierten Strang kontinuierlich und mit einwandfreier Oberfläche abzuführen und in einem Kühlbad abkühlen zu können. Um die sehr teuren Kunststoffverarbeitungsmaschinen möglichst effektiv einsetzen zu können, wird des weiteren gefordert, daß sich die Formen möglichst schnell auswechseln lassen, um beim Einrichten eines anderen Spritzguß- oder Blasformteils oder eines anderen Extrusionsprofils möglichst kurze Stillstandszeiten der Maschinen hinnehmen zu müssen.

Zu diesem Zweck ist es bekannt, die Anschlüsse an den Formen als Schnellkupplungen auszubilden, die sich leicht lösen lassen und so gestaltet sind, daß beim Lösen der Kupplung kein Fluid aus den Leitungen und den Formen selber austreten kann.

Da die Formen in der Regel mit Wasser gekühlt werden, kann es vorkommen, daß das Wasser über längere Zeit in den Hohlräumen der Formen verbleibt und dort zu Korrosion führt. Des weiteren sind derartige Schnellkupplungen teuer und störanfällig, so daß einfache Schnellkupplungen ohne automatischen Verschluß beim Lösen bevorzugt werden, jedoch läuft in diesem Fall beim Trennen der Kupplung das Fluid aus den Formen aus und führt zu Verschmutzungen und Korrosion an der Formaußenseite und, was sehr viel schwerwiegender ist, in den Formhohlräumen.

Wichtig ist des weiteren, um eine hohe Ausnutzung der Maschinen zu erreichen, daß die Formen sehr schnell auf die gewünschte Temperatur gelangen.

Der Erfindung liegt die Aufgabe zugrunde, eine Vorrichtung zu schaffen, die bei einfachen Aufbau ein schnelles Auswechseln und Temperieren von Formen zu erreichen gestattet, ohne daß dabei durch in den Formen verbleibendes Fluid Korrosions- und Verschmutzungsgefahr besteht.

Ausgehend von dieser Aufgabenstellung wird bei einer Vorrichtung der eingangs erwähnten Art vorgeschlagen, daß sie erfindungsgemäß aus einem quaderförmigen Ventilblock mit zwei parallelen Breitseiten und vier Schmalseiten, wenigstens zwei darin angeordneten, wechselweise nockenbetätigten Tellerventilen für die Flüssigkeit und das Gas, einer ersten, mit einer Schmalseite des Ventilblocks verschraubten, prismatischen Verteilerschiene, einer zweiten, mit einer parallelen Schmalseite des Ventilblocks verschraubten prismatischen Verteilerschiene, einem Gasanschluß für ein erstes Tellerventil, einem Gaskanal vom ersten Tellerventil zur ersten Verteilerschiene, einem Flüssigkeitsanschluß für das zweite Tellerventil, einem Flüssigkeitskanal vom zweiten Tellerventil zur ersten Verteilerschiene, Rückschlagventilen im Gaskanal und Flüssigkeitskanal, einem mit dem Gaskanal und dem Flüssigkeitskanal verbundenen Verteilerkanal in der ersten Verteilerschiene, Anschlüssen für Zuläufe zu einer oder mehreren Formen am Verteilerkanal in der ersten Verteilerschiene, einem Verteilerkanal in der zweiten Verteilerschiene, Anschlüssen für Abläufe von einer oder mehreren Formen am Verteilerkanal in der zweiten Verteilerschiene und einem gemeinsamen Abfluß aus dem Verteilerkanal in der zweiten Verteilerschiene besteht.

Wird das erste Tellerventil nockenbetätigt geöffnet, strömt im Falle einer Spritzgießform Kühlflüssigkeit über eine Schlauch- oder Rohrkupplung in der ersten Verteilerschiene zum zweiten Tellerventil, von dort durch den Verteilerkanal in der ersten Verteilerschiene über Anschlüsse und Zuläufe in eine oder mehrere Spritzgießformen, von dort über Abläufe zu den Anschlüssen in der zweiten Verteilerschiene und aus dieser Verteilerschiene durch einen Verteilerkanal zu einem Abfluß mit einer Schlauch- oder Rohrkupplung und kann von dort in einen Auffangbehälter oder das Abwassersystem geleitet werden.

Soll nun ein Formenwechsel vorgenommen werden, wird das zweite Tellerventil geschlossen und das erste Tellerventil geöffnet, so daß nunmehr Druckluft über einen Anschluß am Ventilblock, das erste Tellerventil und einen Druckluftkanal im Ventilblock in den Verteilerkanal in der ersten Anschlußschiene gelangt. Diese Druckluft treibt die vorhandene Kühlflüssigkeit aus der ersten Verteilerschiene, den Zuläufen, den Formen, den Abläufen und der zweiten Verteilerschiene aus. Die Druckluft wird solange durch die Leitungen geschickt, bis sie vollständig trocken sind, was allerdings nur wenige Sekunden dauert. Danach läßt sich die Spritzgießform bzw. lassen sich, falls mehrere Spritzgießformen angeschlossen sind, einzelne oder alle von den Zuläufen und Abläufen abkuppeln und auswechseln, wobei während des Auswechselns selbstverständlich beide Tellerventile geschlossen sind. Die Rückschlagventile dienen dazu, ein Abheben der Tellerventile aufgrund des Drucks der Druckluft oder der Kühlflüssigkeit zu verhindern.

Durch die Anordnung der Tellerventile in einem quaderförmigen Ventilblock kann dieser als Halter für die beiden Verteilerschienen dienen und bildet mit diesen sowie den verschiedenen Anschlüssen eine Einheit, die sich einfach und platzsparend an jeder Spritzgießmaschine bzw. in der Nähe von mehreren Spritzgießmaschinen, falls mehrere Formen beaufschlagt werden sollen, anordnen läßt. Der Aufbau der Vorrichtung ist einfach und betriebssicher. Vor allen Dingen sind Fehlschaltungen der Tellerventile ausgeschlossen, da die Nockenbetätigung so gestaltet ist, daß sich die Tellerventile damit nur wechselweise öffnen und schließen lassen, jedoch niemals gleichzeitig geöffnet sein können.

Da sowohl die Kühlflüssigkeit als auch die Druckluft aus dem gemeinsamen Abfluß der zweiten Verteilerschiene austreten, ist es erforderlich, daß ein ggf. damit verbundener Auffangbehälter schadlos die Zufuhr von Kühlflüssigkeit oder Druckluft zuläßt.

Eine besonders günstige Anordnung der Tellerventile mit Betätigung durch nur einen Nocken läßt sich erreichen, wenn das erste und zweite Tellerventil im Ventilblock unter einem Winkel von 90° zueinander angeordnet sind und eine gemeinsame Nockenbetätigung im Schnittpunkt der Achsen der Tellerventile angeordnet ist. Zum Positionieren der Nockenbetätigung in den einzelnen Betriebsstellungen, kann jedes Tellerventil einen Rollenstößel aufweisen und kann der Betätigungsnocken wenigstens eine mit den Rollenstößeln zusammenwirkende Rastvertiefung aufweisen. Diese Rastvertiefung kann sich entweder am höchsten Punkt des Nockens befinden und sichert dann eine Raststellung in der geöffneten Stellung des ersten oder zweiten Tellerventils.

Die Rastvertiefung kann jedoch auch so angeordnet sein, daß sie sich an der tiefsten Stelle des Betätigungsnocken befindet und somit eine Raststellung für das jeweils geschlossene Tellerventil definiert. Neben der Rastvertiefung, die aufgrund der Federbelastung der Rollenstößel wirksam wird und die Bewegungen des Nockens beiderseits dieser Rastvertiefung zuläßt, können des weiteren die Endstellungen des Nockens dadurch festgelegt werden, daß im Ventilblock eine mit einem Stift am Nocken zusammenwirkende, die Endstellungen des Nockens festlegende Nut angeordnet ist. Zu diesem Zweck kann der Nocken auf einer im Ventilblock gelagerten Welle angeordnet, an einem durch eine Sicherungsscheibe geführten Ende ein Betätigungshebel befestigt und die Sicherungsscheibe mittels eines Sprengrings im Ventilblock gesichert sein, wodurch sich eine einfache Montage der Einzelteile der Tellerventilbetätigung erreichen läßt.

Um eine gedrängte Bauweise bei gleichzeitig guter Zugänglichkeit zu allen Einzelelemente zu erreichen, kann der Gasanschluß für das erste Tellerventil an einer zu diesem Tellerventil parallelen Schmalseite des Ventilblocks angeordnet sein, der Gaskanal zu einer dazu rechtwinkligen Schmalseite führen, in dieser Schmalseite auch der Flüssigkeitsanschluß und der Flüssigkeitskanal für das zweite Tellerventil angeordnet sein und an dieser Schmalseite die erste Verteilerschiene gas- und flüssigkeitsdicht verschraubt sein.

Um ein Rückfließen der Kühlflüssigkeit in die Abläufe der Form bzw. der Formen zu verhindern, wenn diese ausgewechselt werden sollen und die Kühlflüssigkeit bereits mit Hilfe von Druckluft ausgetrieben wurde, können in den Anschlüssen in der zweiten Verteilerschiene für die Abläufe von einer oder mehreren Formen Rückschlagventile angeordnet sein.

Vorzugsweise können die Rückschlagventile in einem Anschlußstück aus durchsichtigen Material bzw. mit einem Sichtfenster angeordnet sein, so daß sie als Durchflußanzeiger dienen können, da im Anschlußstück aus durchsichtigem Material bzw. im Sichtfenster das Öffnen der Rückschlagventile erkennbar ist.

Um die Möglichkeit zu haben, die Zuläufe zu einer oder mehreren Formen unabhängig voneinander mit Kühlflüssigkeit oder Druckluft beaufschlagen zu können, können an den Anschlüssen in der ersten Verteilerschiene für die Zuläufe zu einer oder mehreren Formen Absperrventile angeordnet sein.

Durch die Anordnung von Thermostatventilen in den Anschlüssen an der zweiten Verteilerschiene für die Abläufe von einer oder mehreren Formen, lassen sich die Temperaturen der einzelnen Formen bzw. die einzelnen Abläufe einer Form unabhängig voneinander einstellen.

Die Genauigkeit dieser Temperatureinstellung läßt sich erhöhen, wenn zusätzlich in den Anschlüssen in der zweiten Verteilerschiene für die Abläufe von einer oder mehreren Formen Thermometer angeordnet werden.

Falls die Kühlflüssigkeit nicht direkt aus dem Wasserleitungssystem entnommen wird, kann ein Temperiergerät vorgesehen sein, mit dem sich sowohl Wärme zu- und als auch abführen läßt. Zu diesem Zweck können in der ersten und zweiten Verteilerschiene Anschlüsse mit Absperrventilen für eine einem Temperiergerät zugeführte Temperierflüssigkeit angeordnet sein. Dieses Temperiergerät kann auch dazu dienen, nur einen Teil der Form oder Formen mit Kühlflüssigkeit zu beaufschlagen, während der andere Teil direkt mit dem Kühlwasser aus dem Wasserleitungssystem beaufschlagt wird.

Besonders vorteilhaft läßt sich die erfindungsgemäße Vorrichtung in Verbindung mit einem geschlossenen Kühlflüssigkeitssystem, insbesondere einem Temperiersystem für die Formen verwenden, bei dem vermieden werden muß, daß Druckluft in das Kühlflüssigkeitssystem hineingelangt. Dies läßt sich dadurch erreichen, daß das erste und das zweite Tellerventil in einer ersten Ebene des Ventilblocks angeordnet sind, der Verteilerkanal der ersten Verteilerschiene in dieser Ebene mit dem Gaskanal und dem Flüssigkeitskanal verbunden ist, daß ein drittes und ein viertes Tellerventil in einer zweiten, zur ersten parallelen Ebene angeordnet sind, der gemeinsame Abfluß aus dem Verteilerkanal der zweiten Verteilerschiene in der zweiten Ebene in einem zum dritten und vierten Tellerventil führenden Kanal mündet, ein Flüssigkeitsanschluß für das dritte Tellerventil sowie ein Flüssigkeits-/Gasanschluß für das vierte Tellerventil vorgesehen sind und die Nockenbetätigung der vier Tellerventile so gekoppelt ist, daß in einer ersten Stellung Flüssigkeit durch das geöffnete erste Tellerventil in die erste Verteilerschiene, von dort über die Form oder die Formen in die zweite Verteilerschiene, von dort über das geöffnete dritte Tellerventil in ein geschlossenes Flüssigkeitssystem, z. B. ein Temperiersystem gelangt, daß in einer zweiten Stellung Gas durch das geöffnete zweite Tellerventil in die erste Verteilerschiene, von dort über die Form oder die Formen in die zweite Verteilerschiene, von dort über das geöffnete vierte Tellerventil zu einem Ablauf gelangt und dabei die Flüssigkeit aus der Form bzw. den Formen austreibt.

Vorteilhafterweise können auch das dritte und vierte Tellerventil im Ventilblock unter einem Winkel von 90° zueinander angeordnet sein und eine gemeinsame Nockenbetätigung im Schnittpunkt der Achsen der Tellerventile aufweisen, wobei die Nockenbetätigung für das erste und zweite sowie das dritte und vierte Tellerventil zwangsgekuppelt sind. Dies läßt sich dadurch erreichen, daß ein Nocken auf einer Welle im Schnittpunkt der Achse des dritten und vierten Tellerventils gelagert ist und die Wellen für das erste und zweite sowie das dritte und vierte Tellerventil formschlüssig zusammensteckbar, z. B. mittels einer Quernut und eines Querkeils, miteinander gekuppelt sind.

Um die Masse der Verteilerschienen gering zu halten und Platz für daran anzuordnende Absperrventile, Thermostatventile und dergleichen freizuhalten, können die Verteilerschienen eine der halben Ventilblockbreite entsprechende Breite aufweisen, die erste Verteilerschiene unter dem Ventilblock im Bereich der ersten Ebene und die zweite Verteilerschiene auf dem Ventilblock im Bereich der zweiten Ebene geschraubt sein, wobei der Flüssigkeitsanschluß für das dritte Tellerventil unter dem Ventilblock neben der ersten Verteilerschiene und der Flüssigkeits-/Gasanschluß an einer dazu senkrechten Schmalseite des Ventilblocks angeordnet sein können. Bei dieser Ausführungsform ist es möglich, den Ventilblock aus zwei, jeweils das erste und zweite Tellerventil in der ersten Ebene und das dritte und vierte Tellerventil in der zweiten Ebene aufnehmenden, gleichgeformten und miteinander verschraubten Ventilblockeinheiten bestehen zu lassen.

Die Erfindung wird nachstehend anhand zweier in der Zeichnung dargestellter Ausführungsbeispiele des näheren erläutert. In der Zeichnung zeigen:
- Fig. 1: eine schematische, perspektivische Darstellung einer Vorrichtung mit Anordnung der Tellerventile und der Verteilerschiene in einer Ebene;
- Fig. 2: einen Längsschnitt durch einen Ventilblock mit angeschraubter erster Verteilerschiene;
- Fig. 3: eine schematische, perspektivische Darstellung einer Vorrichtung mit Anordnung der Tellerventile und der Verteilerschienen in zwei versetzten Ebenen;

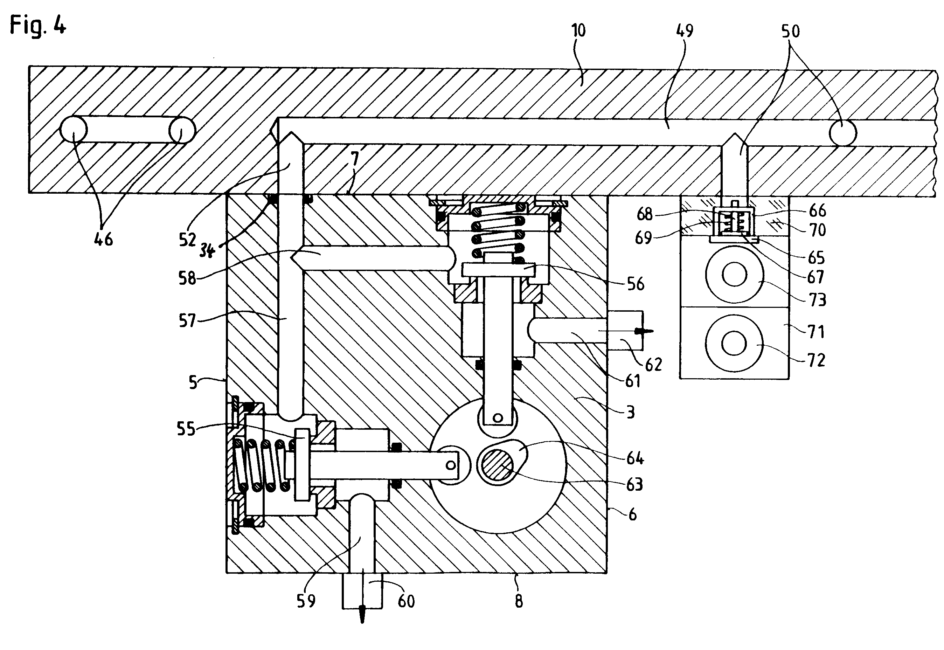

- Fig. 4: einen Längsschnitt durch den Ventilblock und die zweite Verteilerschiene;
- Fig. 5: einem Querschnitt durch den Ventilblock durch die Ebene der Nockenbetätigung.

An einen quaderförmigen Ventilblock 1 mit zwei parallelen Breitseiten 4 und vier paarweise parallelen Schmalseiten 5, 6, 7, 8 ist anliegend an die untere Schmalseite 8 eine erste prismatische Verteilerschiene 9 und anliegend an die obere Schmalseite 7 eine zweite prismatische Verteilerschiene 10 geschraubt.

Diese aus dem Ventilblock 1 und den Verteilerschienen 9, 10 gebildete Vorrichtung steht mit einer aus einer Formoberhälfte 11 und einer Formunterhälfte 12 gebildeten Spritzgießform über Zuläufe 40 und Abläufe 51 in Verbindung. Statt eine Spritzgießform 11, 12 mit mehreren Zuläufen 40 und Abläufen 51 zu versehen, können auch mehrere Spritzgießformen jeweils mit je einem Zulauf 40 und je einem Ablauf 51 verbunden sein.

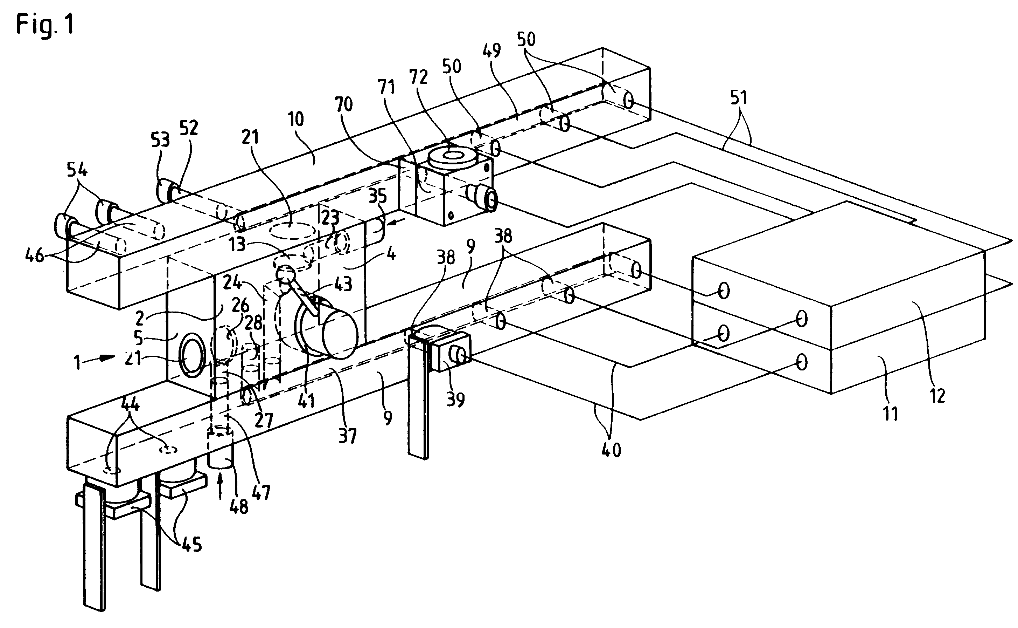

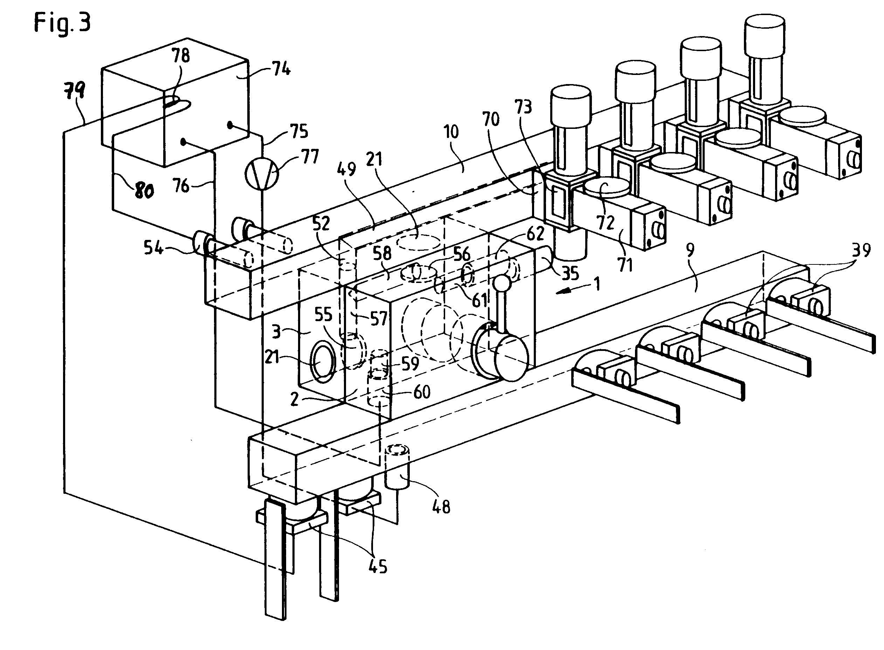

Der Ventilblock 1 in Fig. 1 ist etwa so breit wie die prismatischen Verteilerschienen 9, 10, und dieser Ventilblock 1 dient als Träger für die Verteilerschienen 9, 10. Im Ventilblock 1, der in bezüglich Fig. 3 näher erläuterter Weise eine Ventilblockeinheit 2 bildet, ist ein erstes Tellerventil 13 angeordnet. Dieses erste Tellerventil 13 ruht in der geschlossenen Stellung auf einem Ventilsitzring 14 und läßt sich durch einen abgedichtet mittels einer O-Ring-Dichtung 17 in der Ventilblockeinheit 2 geführten Ventilstößel 15 mit einer Rolle 16 betätigen. Mittels des Tellerventils 13 läßt sich eine Strömungsverbindung zwischen einer Kammer 18 und einer Kammer 19 in der Ventilblockeinheit 2 herstellen oder unterbrechen. Das erste Tellerventil 13 ist mit einer Druckfeder 20 in der Kammer 18 beaufschlagt, die sich an einem Deckel 21 abstützt, der mittels eines Sprengrings 22 in der Ventilblockeinheit 2 gehalten und mittels einer O-Ring-Dichtung 25 abgedichtet ist. Zur Kammer 18 führt ein Gasanschluß 23, der an der Schmalseite 6 eine Schlauch- oder Rohrkupplung 35 aufweist.

Ein zweites Tellerventil 26 ist rechtwinklig zur Achse des ersten Tellerventils 13 angeordnet. Die Kammern 18, 19 beiderseits des zweiten Tellerventils 26, der Ventilstößel 15 mit der Rolle 16 und die O-Ring-Dichtung 17 für den Ventilstößel 15 sowie die Druckfeder 20, der Deckel 21 mit seiner Dichtung 25 und dem Sprengring 22 sind wie beim ersten Tellerventil 13 gestaltet, jedoch führt zur Kammer 18 des zweiten Tellerventils 26 ein von der Schmalseite 8 der Ventilblockeinheit 2 ausgehender Flüssigkeitsanschluß 27 und parallel dazu ein Flüssigkeitskanal 28 von der Kammer 19 ebenfalls zur Schmalseite 8. Zu dem Flüssigkeitsanschluß 27 und dem Flüssigkeitskanal 28 parallel verläuft noch ein Gaskanal 24, der von der Kammer 19 des ersten Tellerventils 13 ausgeht und ebenfalls an der Schmalseite 8 der Ventilblockeinheit 2 mündet.

Im Schnittpunkt der Achsen der Tellerventile 13, 26 ist eine Welle 29 angeordnet, die einen Nocken 30 trägt. Dieser Nocken 30 weist an seinem höchsten Punkt eine Rastvertiefung 31 auf, deren Radius dem Radius der Rollen 16 an den Ventilstößeln 15 entspricht. Ein zur Welle 29 paralleler Stift 32 ragt in eine gebogene Nut 33 in der Ventilblockeinheit 2 und dient dazu, die Endstellungen des Nockens 30 zu definieren.

Die dargestellte Stellung entspricht einer neutralen Stellung, in der das erste und das zweite Tellerventil 13, 26 geschlossen sind. Der Stift 32 liegt in dieser Stellung am Ende der Nut 33 an. Die Welle 29 mit dem Nocken 30 läßt sich mittels eines Betätigungshebels 43 von außen entgegen dem Uhrzeigersinn verdrehen, bis die erste Raststellung erreicht ist, wenn die Rastvertiefung 31 in den Bereich der Rolle 16 am Ventilstößel 15 des ersten Tellerventils 13 gelangt. In dieser ersten Raststellung ist das erste Tellerventil 13 geöffnet. Wird die Welle 29 mit dem Nocken 30 mittels des Betätigungshebels 43 entgegengesetzt dem Uhrzeigersinn weitergedreht, ergibt sich die zweite Raststellung, wenn die Rastvertiefung 31 in den Bereich der Rolle 16 am Ventilstößel 15 des zweiten Tellerventils 26 gelangt. In dieser zweiten Raststellung befindet sich der Stift 32 in Anlage am entgegengesetzten Ende der Nut 33, das zweite Tellerventil 26 ist geöffnet, und das erste Tellerventil 13 ist wieder geschlossen.

Die erste Verteilerschiene 9 weist einen Verteilerkanal 37 auf, an dem Anschlüsse 38 mit Absperrventilen 39 angeordnet sind. Über diese Absperrventile 39 besteht eine Verbindung zu den Zuläufen 40 zur Spritzgießform 11, 12.

Der Verteilerkanal 37 steht über Rückschlagventile 36 mit dem Gaskanal 24 und dem Flüssigkeitskanal 28 in der Ventilblockeinheit 2 in Verbindung. Die Abdichtung zwischen der Ventilblockeinheit 2 und den Rückschlagventilen 36 in der Verteilerschiene 9 erfolgt über O-Ring-Dichtungen 34.

Des weiteren verläuft in der Verteilerschiene 9 eine Querbohrung 47, die auf der einen Seite mit dem Flüssigkeitsanschluß 27 in der Ventilblockeinheit 2 und auf der anderen Seite mit einer Schlauch- oder Rohrkupplung 48 in Verbindung steht. Auch die Querbohrung 47 ist zur Ventilblockeinheit 2 mittels einer O-Ring-Dichtung 34 abgedichtet.

An der ersten Verteilerschiene 9 können sich noch Anschlüsse 44 mit Absperrventilen 45 für ein in Fig. 1 nicht dargestelltes Temperiersystem befinden.

Die zweite Verteilerschiene 10 ist auf die Schmalseite 7 geschraubt und weist einen Verteilerkanal 49 auf, der einerseits über Anschlüsse 50 mit den Abläufen 51 der Spritzgußform 11, 12 und andererseits mit einem gemeinsamen Abfluß 52 mit einer Schlauch- oder Rohrkupplung 53 in Verbindung steht.

An den Anschlüssen 50 sind Rückschlagventile 65 angeordnet, die einen Rückfluß von Flüssigkeit aus dem Verteilerkanal 49 in die Abläufe 51 verhindern. Diese Rückschlagventile 65 sind in einem Anschlußstück 70 aus durchsichtigem Material, z. B. Acrylglas angeordnet und bestehen im einzelnen aus einem Ventilkorb 66, einem Ventilteller 67, einem Führungszapfen 68 und einer Druckfeder 69. Der Führungszapfen 68 ragt, wenn der Ventilteller 67 in Strömungsrichtung zum Verteilerkanal 49 geöffnet ist, über den Boden des Ventilkorbs 66 hinaus und ist durch das Anschlußstück 70 in dieser Stellung sichtbar, wodurch sich eine leicht erkennbare Durchflußanzeige ergibt. An das Anschlußstück 70 schließt sich ein Zwischenstück 71 an, das als Halter für ein Thermometer 72 dient.

Das Anschlußstück 70 kann auch ein Sichtfenster aufweisen, ansonsten aber undurchsichtig sein.

An einem freien Ende der Verteilerschiene 10 können Anschlüsse 46 mit Schlauch- oder Rohrkupplungen 54 für ein Temperiersystem angeordnet sein.

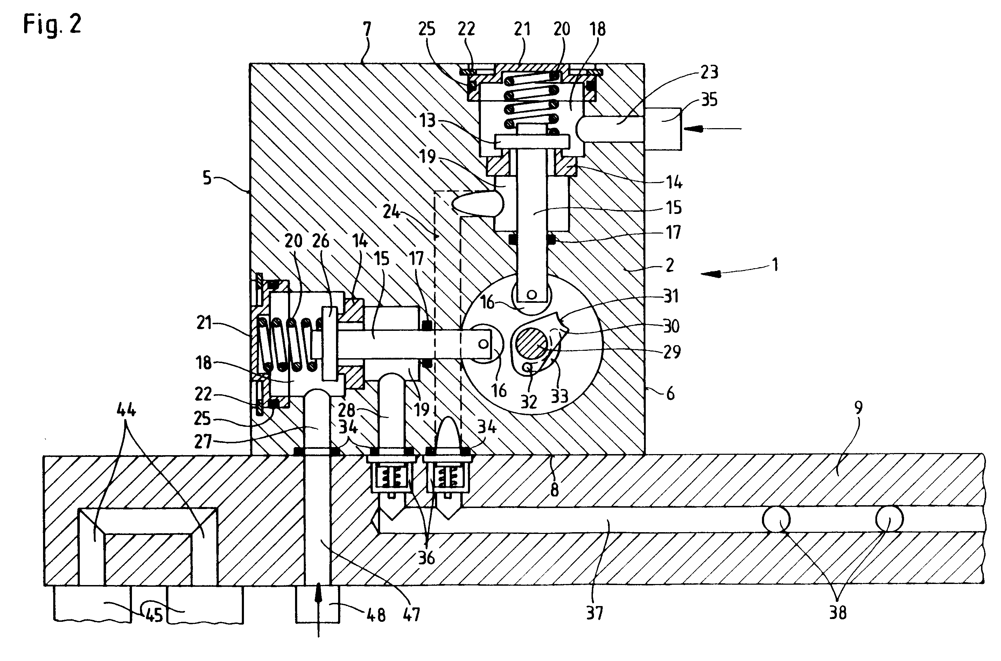

Die aus der Ventilblockeinheit 2 und den angeschraubten Verteilerschienen 9, 10 bestehende Vorrichtung läßt sich als Einheit an einer Spritzgießmaschine oder in der Nähe von mehreren Spritzgießmaschinen anordnen und dient dazu, einen schnellen Formenwechsel zu ermöglichen. Um z. B. eine aus den Formhälften 11, 12 mit den Zuläufen 40 und den Abläufen 51 bestehende Spritzgießform mit der Vorrichtung zu verbinden, wird zunächst der Betätigungshebel 43 in eine neutrale Stellung gebracht, die der Nockenstellung in Fig. 2 entspricht. In dieser Stellung sind das erste und zweite Tellerventil 13, 26 geschlossen. An die Schlauch- und Rohrkupplung 48 ist eine Kühlmittelzufuhr angeschlossen, die im einfachsten Fall aus einem Leitungswasseranschluß besteht, das stets mit fast gleichbleibender Temperatur zur Verfügung steht. In diesem Fall steht der gemeinsame Abfluß 52 über eine mit der Schlauch- oder Rohrkupplung 53 verbundene Leitung mit dem Abwassersystem in Verbindung. Nachdem die Verbindung von den Zuläufen 40 zu den Absperrventilen 39 sowie zwischen den Abläufen 51 und den Zwischenstücken 71 hergestellt ist, werden die Absperrventile 39 geöffnet und der Betätigungshebel 43 in eine Stellung bewegt, in der das zweite Tellerventil 26 geöffnet ist. In dieser Stellung strömt das Kühlwasser von der Schlauch- und Rohrkupplung 48 durch die Querbohrung 47 über den Flüssigkeitsanschluß 27, das zweite Tellerventil 26 und den Flüssigkeitskanal 28 in den Verteilerkanal 37 und von dort aus über die Anschlüsse 38, die geöffneten Absperrventile 39 und die Zuläufe 40 in die Spritzgießform 11, 12. Von dort gelangt das Kühlwasser über die Abläufe 51, die Anschlußstücke 71, das Zwischenstück 70, die Anschlüsse 50 in den Verteilerkanal 49 und von dort über den gemeinsamen Abfluß 52 in das Abwassersystem. Durch das Anschlußstück 70 läßt sich in der beschriebenen Weise beobachten, ob ein Durchfluß durch die Spritzgußform 11, 12 stattfindet. Das Thermometer 72 zeigt die Ablauftemperatur des Kühlwassers an. Diese Ablauftemperatur läßt sich mittels der Absperrventile 39 individuell für jeden Strang einstellen. Soll die Spritzgießform 11, 12 ausgewechselt werden, wird der Betätigungshebel 43 in die Stellung bewegt, in der das zweite Tellerventil 26 geschlossen und das erste Tellerventil 13 geöffnet ist. Hierdurch gelangt Druckluft über den Gasanschluß 23 und den Gaskanal 24 in den Verteilerkanal 37 in der ersten Verteilerschiene 9. Das Rückschlagventil 36 vor dem Flüssigkeitskanal 28 verhindert, daß die Druckluft bis zum zweiten Tellerventil 26 gelangt und dieses ggf. von seinem Ventilsitzring 14 abhebt. Somit kann keine Druckluft in das Kühlwassersystem gelangen. Vielmehr treibt die Druckluft über die Verteilerkammer 37, die Anschlüsse 38, die Absperrventile 39 sämtliche Flüssigkeit aus den Zuläufen 40, der Spritzgußform 11, 12 und den Abläufen 51 über den Verteilerkanal 49 in der zweiten Verteilerschiene 10 hinaus. Die Flüssigkeit gelangt über den gemeinsamen Abfluß 52 in das Abwassersystem. Nachdem die gesamte Flüssigkeit ausgetrieben ist, werden die Form sowie die Kanäle und Leitungen durch die weiterstromende Druckluft getrocknet, was nur wenige Sekunden dauert, sodann wird der Betätigungshebel 43 wieder in die neutrale Stellung bewegt, in der beide Tellerventile 13, 26 geschlossen sind. Hierauf werden die Absperrventile 39 ebenfalls geschlossen und die Spritzgießform 11, 12 läßt sich von der Vorrichtung trennen und gegen eine andere Spritzgießform auswechseln.

An die Schlauch- oder Rohrkupplungen 48, 53 läßt sich auch ein geschlossenes Kühlflüssigkeitssystem, z. B. ein Temperiergerät 74 anschließen, wie es in Fig. 3 dargestellt ist, wenn dieses, ohne Schaden zu nehmen, die zum Austreiben der Flüssigkeit aus der Spritzgußform 11, 12 benutzte Druckluft aufnehmen kann.

Zusätzlich zu den oder anstelle der Thermometer 72 können an den Anschlüssen 50 auch Thermostatventile 73 angeordnet sein, wie dies ebenfalls in Fig. 3 dargestellt ist. In diesem Fall erfolgt die Durchflußregelung in Abhängigkeit von der Ablauftemperatur automatisch durch die Thermostatventile 73 auf einen einstellbaren Wert, der sich durch die Thermometer 72 kontrollieren läßt.

Die in Fig. 3 dargestellte Ausführungsform ist dann angezeigt, wenn auf keinen Fall Druckluft in das Temperiergerät 74 gelangen darf. Bei dieser Ausführungsform besteht der Ventilblock aus Zwei miteinander verschraubten Ventilblockeinheiten 2, 3. Die erste Verteilerschiene 9 ist in diesem Fall an die untere Schmalseite 8 der ersten Ventilblockeinheit 2 in einer ersten Ebene geschraubt, während die zweite Verteilerschiene 10 auf die obere Schmalseite 7 der zweiten Ventilblockeinheit 3 in einer zweiten, um die Breite der Verteilerschienen 9, 10 versetzten Ebene geschraubt ist. Bei dieser Anordnung mündet der gemeinsame Abfluß 52 der Verteilerschiene in einen Kanal in der Ventilblockeinheit 3, dessen eine Abzweigung 57 zum dritten Tellerventil 55 und dessen andere Abzweigung 58 zum vierten Tellerventil 56 führt. Diese Abzweigungen 57, 58 münden jeweils in den Kammern 18 des dritten Tellerventils 55 bzw. des vierten Tellerventils 56. Von der Kammer 19 des dritten Tellerventils 55 führt ein Flüssigkeitsanschluß 59 zur unteren Schmalseite 8 der Ventilblockeinheit 3 und weist dort eine Schlauch- oder Rohrkupplung 60 auf. Von der Kammer 19 des vierten Tellerventils 56 führt ein Flüssigkeits-/Gasanschluß 61 zur Schmalseite 6 und endet hier ebenfalls in einer Schlauch- oder Rohrkupplung 62.

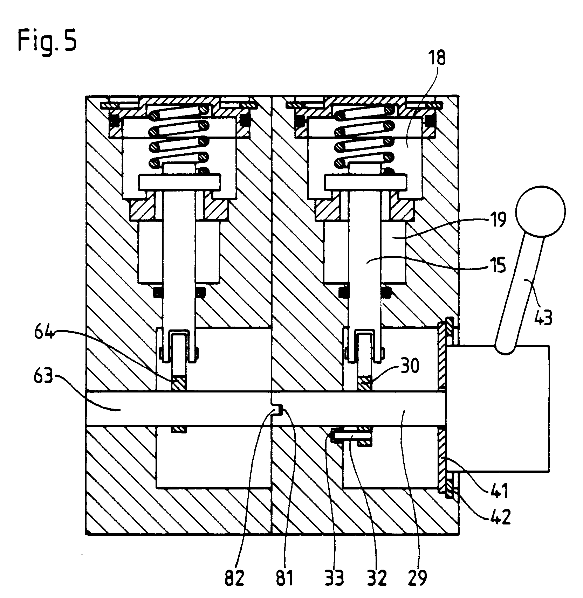

Die Betätigung des dritten und vierten Tellerventils 55, 56 erfolgt durch einen auf einer Welle 63 angeordneten Nocken 64. Um die Betätigung des ersten und zweiten Tellerventils 13, 26 sowie des dritten und vierten Tellerventils 55, 56 zwangweise zu kuppeln, weist die Welle 63 an ihrem einen Ende einen Querkeil 82 auf, der sich in eine Quernut 81 am entsprechenden Ende der Welle 29 einfügen läßt (Fig. 5). Da die Welle 29 durch eine Sicherungsscheibe 41, die in der Ventilblockeinheit 2 mittels eines Sprengrings 42 gehalten ist, hindurchgeführt ist und daran der Betätigungshebel 43 befestigt ist, bedeutet dies, daß sich durch eine entsprechende Anordnung der Nocken 30 und 64 stets nur das erste und vierte Tellerventil 13, 56 oder das zweite und dritte Tellerventil 26, 55 gleichzeitig öffnen lassen und alle vier Tellerventile 13, 26, 55, 56 in der neutralen Stellung des Betätigungshebels 43 gleichzeitig geschlossen sind.

Bei der in Fig. 3 dargestellten Ausführungsform ist eine Zuleitung 75 von einem Temperiergerät 74 über eine Umwälzpumpe 77 mit der Schlauch- oder Rohrkupplung 48 an der ersten Verteilerschiene 9 verbunden, während eine Rückleitung 76 mit der Schlauch- oder Rohrkupplung 60 an der Unterseite der zweiten Ventilblockeinheit 3 verbunden ist. In der Stellung des Betätigungshebels 43, in der das zweite und dritte Tellerventil 26, 55 geöffnet sind, wird die aus dem Temperiergerät 74 kommende, temperierte Flüssigkeit mittels einer Umwälzpumpe 77 durch die erste Ventilblockeinheit 2, die erste Verteilerschiene 9, die Zu- und Abläufe 40, 51 einer oder mehrerer Spritzgießformen 11, 12, die Thermostatventile 73, die zweite Verteilerschiene 10, die zweite Ventilblockeinheit 3 wieder zum Temperiergerät 74 im ständigen Umlauf führt. Dabei wird die Flüssigkeit im Temperiergerät 74, z. B. mittels einer Kühlschlange 78, auf einer einstellbaren Temperatur gehalten. Durch diese Kühlschlange 78 fließt eine Kühlflüssigkeit, z. B. Wasser aus einem Leitungssystem, die dem einen Absperrventil 45 an der ersten Verteilerschiene zugeführt wird, über das zweite Absperrventil 45 und eine Zuleitung 79 zur Kühlschlange 78 gelangt und von dort über eine Rückleitung 80 zu dem einen Anschluß 46 in der zweiten Verteilerschiene 10 geführt wird. Von dort fließt das Kühlwasser aus dem zweiten Anschluß 46 in das Abwassersystem. Soll die Kühlflüssigkeit im Temperiergerät 74 erwärmt werden, läßt sich durch das Leitungssystem 78, 79, 80 erwärmte Flüssigkeit leiten, oder die Absperrventile 45 werden geschlossen und die Kühlflüssigkeit im Temperiergerät 74 wird durch eine nicht dargestellte elektrische Heizung erwärmt.

Soll nun ein Formenwechsel vorgenommen werden, wird der Betätigungshebel 43 in eine Stellung gebracht, in der das erste und das vierte Tellerventil 13, 56 geöffnet sind. In dieser Stellung gelangt Druckluft über die Schlauch- oder Rohrkupplung 35, die erste Ventilblockeinheit 2 in die erste Verteilerschiene 9 und von dort aus über die Zu- und Abläufe 40, 51 in eine oder mehrere Spritzgießformen 11, 12 und treibt die darin befindliche Flüssigkeit über die zweite Verteilerschiene 10, die zweite Ventilblockeinheit 3 bis zum Flüssigkeits-/Gasanschluß 61, der über die Schlauch- oder Rohrkupplung 62 mit einem Abflußsystem in Verbindung steht, aus, so daß die Form 11, 12 mit ihren Zu- und Abläufen 40, 51 entleert und getrocknet wird.

Durch die Anordnung der Ventilblockeinheit 2 mit dem ersten und zweiten Tellerventil 13, 26 in einer Ebene und der Ventilblockeinheit 3 mit dem dritten und vierten Tellerventil 55, 56 in einer zweiten Ebene ist gewährleistet, daß das Temperiergerät 74 nicht mit Druckluft beaufschlagt wird und die Leitungen 75, 76 stets flüssigkeitsgefüllt bleiben, so daß keine Gefahr besteht, daß Luft in die Umwälzpumpe 77 gelangt und dadurch die Förderung abreißt.

Auch bei der Ausführungsform gemäß Fig. 3 ist es vorteilhaft, den Durchfluß über die Anschlußstücke 70 anhand der Stellung der darin angeordneten Rückschlagventile 65 zu beobachten. Die Thermostatventile 73 und die Thermometer 72 können auch im vorliegenden Fall dazu dienen, für jeden Anschluß 40 an einer Spritzgießform 11, 12 oder für die Anschlüsse 40 unterschiedlicher Spritzgießformen vorgebbare Temperaturen einzustellen und zu halten, jedoch ist die Vorrichtung auch ohne diese Zusatzelemente brauchbar, wenn über das Temperiergerät 74 bereits eine gleichbleibende Temperatur, die für alle Formen oder Formbereiche gleich ist, vorgegeben wird.

Das Temperiergerät 74 kann des weiteren dazu dienen, nur einen Teil der Form oder Formen 11, 12 mit temperierter Kühlflüssigkeit zu beaufschlagen, während ein anderer Teil direkt mit Kühlflüssigkeit aus dem Leitungssystem beaufschlagt wird. In diesem Fall ist die Schlauch- oder Rohrkupplung 48 direkt mit dem Leitungssystem verbunden, so daß Leitungswasser über die Absperrventile 39 in einen Teil der Form oder Formen 11, 12 gelangt und von dort über die Thermostatventile 73 zur gemeinsamen Schlauch- oder Rohrkupplung 52 fließt, von wo aus es in das Abwassersystem geleitet wird. Des weiteren besteht eine Verbindung in der ersten Verteilerschiene 9 zwischen der Querbohrung 47 und den Anschlüssen 44, so daß Leitungswasser auch über die Zuleitung 79 zur Kühlschlange 78 und von dort über die Rückleitung 80 und die eine Schlauch- oder Rohrkupplung 54 ebenfalls in das Abwassersystem fließt. Die Zuleitung 75 und die Rückleitung 76 des Temperiergeräts 74 sind dann direkt mit einem Teil der Form oder Formen 11, 12 verbunden und bilden unter Zwischenschaltung der Umwälzpumpe 77 einen geschlossenen Kreislauf, der eine andere Temperatur aufweist als der über den Ventilblock 1, die Verteilerschienen 9, 10 und einem Teil der Form oder Formen 11, 12 geführte offene Kreislauf. In diesem geschlossenen Kreislauf 74, 75, 76 77, 11, 12 läßt sich eine weitere Vorrichtung mit dem Ventilblock 1 und den Verteilerschienen 9, 10 so anordnen, daß dieser Teil der Form oder Formen 11, 12 entweder mit Kühlflüssigkeit aus dem Temperiergerät 74 oder mit Druckluft beaufschlagt wird, wenn ein Formenwechsel vorgenommen werden soll.

Selbstverständlich läßt sich die Ausführungsform gemäß Fig. 3 auch ohne Temperiergerät 74 verwenden, wenn ein Wasserleitungssystem direkt mit der Schlauch- oder Rohrkupplung 48 verbunden wird und das aus der oder den Formen 11, 12 kommende Kühlwasser von der Schlauch- oder Rohrkupplung 60 direkt in das Abwassersystem geleitet wird.

Die in Fig. 1 und Fig. 3 dargestellte Anordnung der Absperrventile 39, der Thermometer 72 und der Thermostatventile 73 auf der gleichen Seite wie die Spritzgießform 11, 12 ist nicht zwingend, sondern läßt sich nach den örtlichen Gegebenheiten verändern. Insbesondere kann es vorteilhaft sein, die Absperrventile 39 und die Anschlüsse mit den Thermometern 72 und den Thermostatventilen 73 auf der zum Betätigungshebel 43 entgegengesetzten Seite der Verteilerschiene 9, 10 anzuordnen, um eine zwanglose Führung der Zuläufe 40 und der Abläufe 51 und der Handhabung des Betätigungshebels 43 zu erreichen.

## Patentansprüche

1. Vorrichtung zum wahlweisen Beaufschlagen von Formen für die Kunststoffverarbeitung mit einer Flüssigkeit oder einem unter Druck stehendem Gas gekennzeichnet durch
- einen quaderförmigen Ventilblock (1; 2, 3) mit zwei parallelen Breitseiten (4) und vier Schmalseiten (5 bis 8),
- wenigstens zwei darin angeordnete, wechselweise, nockenbetätigte Tellerventile (13, 26) für die Flüssigkeit und das Gas,
- eine erste, mit einer Schmalseite (8) des Ventilblocks (1; 2, 3) verschraubten prismatischen Verteilerschiene (9),
- eine zweite, mit einer parallelen Schmalseite (7) des Ventilblocks (1; 2, 3) verschraubten, prismatischen Verteilerschiene (10),
- einem Gasanschluß (23, 35) für ein erstes Tellerventil (13),
- einen Gaskanal vom ersten Tellerventil (15) zur ersten Verteilerschiene (10),
- einen Flüssigkeitsanschluß (27) für das zweite Tellerventil (26),
- einen Flüssigkeitskanal (28) zur erster Verteilerschiene (9),
- Rückschlagventile (36) im Gaskanal (24) und einem Flüssigkeitskanal (28),
- eine mit dem Gaskanal (24) und dem Flüssigkeitskanal (28) verbundenen Verteilerkanal (37) in der ersten Verteilerschiene (9),
- Anschlüsse (38) für Zuläufe (40) zu einer oder mehreren Formen (11, 12) am Verteilerkanal (37) in der ersten Verteilerschiene (9),
- eine Verteilerkanal (49) in der zweiten Verteilerschiene (10),
- Anschlüsse (50) für Abläufe (51) von einer oder mehreren Formen (11, 12) am Verteilerkanal (49) in der zweiten Verteilerschiene (10),
- eine gemeinsamen Abfluß (52) aus dem Verteilerkanal (49) in der zweiten Verteilerschiene (10).

2. Vorrichtung nach Anspruch 1, **dadurch gekennzeichnet**, daß das erste und zweite Tellerventil (13, 26) im Ventilblock (1; 2, 3) unter einem Winkel von 90° Zueinander angeordnet sind, und eine gemeinsame Nockenbetätigung (29, 30, 31) im Schnittpunkt der Achse der Tellerventile (13, 26) angeordnet ist.

3. Vorrichtung nach Anspruch 1 oder 2, **dadurch gekennzeichnet**, daß jedes Tellerventil (13, 26) einen Rollenstößel (15, 16) aufweist und der Betätigungsnocken (30) wenigstens eine mit den Rollenstößeln (15, 16) zusammenwirkende Rastvertiefung (31) aufweist.

4. Vorrichtung nach Anspruch 1, 2 oder 3, **dadurch gekennzeichnet**, daß die Rastvertiefung (31) in der Nockenspitze angeordnet ist.

5. Vorrichtung nach einem der Ansprüche 1 bis 4, **dadurch gekennzeichnet**, daß der Nocken (30) auf einer im Ventilblock (1; 2, 3) gelagerten Welle (29) angeordnet ist, an einem durch eine Sicherungsscheibe (41) geführten Ende ein Betätigungshebel (43) befestigt ist, die Sicherungscheibe (41) mittels eines Sprengrings (42) im Ventilblock (1; 2, 3) gesichert ist und im Ventilblock (1; 2, 3) eine mit einem Stift (32) am Nocken (30) zusammenwirkende, die Endstellungen des Nockens (30) festlegende Nut (33) angeordnet ist.

6. Vorrichtung nach einem der Ansprüche 1 bis 5, **dadurch gekennzeichnet**, daß der Gasanschluß (23) für das erste Tellerventil (13) an einer zu diesem Tellerventil (13) parallelen Schmalseite (6) des Ventilblocks (2) angeordnet ist, der Gaskanal (24) zu einer dazu rechtwinkligen Schmalseite (8) führt, in dieser Schmalseite (8) auch der Flüssigkeitsanschluß (27) und der Flüssigkeitskanal (28) für das zweite Tellerventil (26) angeordnet sind und mit dieser Schmalseite (8) die erste Verteilerschiene (9) gas- und flüssigkeitsdicht verschraubt ist.

7. Vorrichtung nach einem der Ansprüche 1 bis 6, **dadurch gekennzeichnet**, daß in den Anschlüssen (50) in der zweiten Verteilerschiene (10) für den Ablauf (51) von einer oder mehreren Formen (11, 12) Rückschlagventile (65) angeordnet sind.

8. Vorrichtung nach Anspruch 7, **dadurch gekennzeichnet**, daß die Rückschlagventile (65) in einem Anschlußstück (70) aus durchsichtigem Material bzw. mit einem Sichtfenster angeordnet sind und als Durchflußanzeiger dienen.

9. Vorrichtung nach einem der Ansprüche 1 bis 8, **gekennzeichnet durch** an den Anschlüssen (38) in der ersten Verteilerschiene (9) für die Zuläufe (40) zu einer oder mehreren Formen (11, 12) angeordnete Absperrventile (39).

10. Vorrichtung nach einem der Ansprüche 1 bis 9, **gekennzeichnet durch** in den Anschlüssen (50) in der zweiten Verteilerschiene (10) für die Abläufe (51) von einer oder mehreren Formen (11, 12) angeordnete Thermostatventile (73).

11. Vorrichtung nach einem der Ansprüche 1 bis 10, **gekennzeichnet durch** in den Anschlüssen (50) in der zweiten Verteilerschiene (10) für die Abläufe (51) von einer oder mehreren Formen (11, 12) angeordnete Thermometer (72).

12. Vorrichtung nach einem der Ansprüche 1 bis 11, **dadurch gekennzeichnet**, daß in der ersten und zweiten Verteilerschiene (9, 10) Anschlüsse (44, 46) mit Absperrventilen (45) für eine einem Temperiergerät (74) zugeführte Temperierflüssigkeit angeordnet sind.

13. Vorrichtung nach einem der Ansprüche 1 bis 12, **dadurch gekennzeichnet**, daß das erste und zweite Tellerventil (13, 26) in einer ersten Ebene des Ventilblocks (1; 2, 3) angeordnet sind, der Verteilerkanal (37) der ersten Verteilerschiene (9) in dieser Ebene mit dem Gaskanal (24) und dem Flüssigkeitskanal (28) verbunden ist, daß ein drittes und viertes Tellerventil (55, 56) in einer zweiten, zur ersten parallelen Ebene angeordnet sind, der gemeinsame Abfluß (52) aus dem Verteilerkanal (49) in der zweiten Verteilerschiene (10) in der zweiten Ebene in einem zum dritten und vierten Tellerventil (55, 56) führenden Kanal (57, 58) mündet, ein Flüssigkeits-/Gasanschluß (59) für das dritte Tellerventil (55) vorgesehen ist und die Nockenbetätigung der vierten Tellerventile (13, 26, 55, 56) so gekoppelt ist, daß in einer ersten Stellung Flüssigkeit durch das geöffnete erste Tellerventil (13) in die erste Verteilerschiene (9), von dort über die Form (11, 12) oder die Formen in die zweite Verteilerschiene (10), von dort über das geöffnete dritte Tellerventil (55) in einen Flüssigkeitskreislauf (74, 75, 76, 77) gelangt, daß in einer zweiten Stellung Druckgas durch das geöffnete zweite Tellerventil (26) in die erste Verteilerschiene (9), von dort über die Form (11, 12) oder die Formen in die zweite Verteilerschiene (10), von dort über das geöffnete vierte Tellerventil (56) Zu einem Ablauf (61) gelangt und dabei die Flüssigkeit aus der Form (11, 12) bzw. den Formen austreibt.

14. Vorrichtung nach Anspruch 13, **dadurch gekennzeichnet**, daß das dritte und vierte Tellerventil (55, 56) im Ventilblock (3) unter einem Winkel von 90° zueinander angeordnet sind, eine gemeinsame Nockenbetätigung (63, 64) im Schnittpunkt der Achsen der Tellerventile (55, 56) angeordnet ist und die Nockenbetätigungen (29, 30, 31; 63, 64) für das erste und zweite sowie das dritte und vierte Tellerventil (13, 26, 55, 56) zwangsgekuppelt sind.

15. Vorrichtung nach Anspruch 14, **dadurch gekennzeichnet**, daß ein Nocken (64) auf einer Welle (63) im Schnittpunkt der Achsen des dritten und vierten Tellerventils (55, 56) gelagert ist und die Wellen (29, 63) für das erste und zweite sowie das dritte und vierte Tellerventil (13, 26, 55, 56) formschlüssig zusammensteckbar (Quernut 81, Querkeil 82) miteinander gekuppelt sind.

16. Vorrichtung nach Anspruch 13, 14 oder 15, **dadurch gekennzeichnet**, daß die Verteilerschienen (9, 10) eine der halben Ventilblockbreite entsprechende Breite aufweisen, die Verteilerschiene (9) unter dem Ventilblock (1; 2, 3) im Bereich der ersten Ebene und die zweite Verteilerschiene (10) auf dem Ventilblock (1; 2, 3) im Bereich der zweiten Ebene geschraubt sind, und der Flüssigkeitsanschluß (59) für das dritte Tellerventil (55) unter dem Ventilblock (1; 2, 3) neben der ersten Verteilerschiene (9) und der Flüssigkeits-/Gasanschluß (61) an einer dazu senkrechten Schmalseite (6) des Ventilblocks (1; 2, 3) angeordnet sind.

17. Vorrichtung nach einem der Ansprüche 13 bis 16, **dadurch gekennzeichnet**, daß der Ventilblock (1) aus zwei, jeweils das erste und zweite Tellerventil (13, 26) in der ersten Ebene und das dritte und vierte Tellerventil (55, 56) in der zweiten Ebene aufnehmenden, gleichgeformten und miteinander verschraubten Ventilblockeinheiten (2, 3) besteht.

## Claims

1. Device for selectively introducing a liquid or a pressurised gas into moulds for the processing of plastics, characterised by
- a cuboid valve block (1; 2, 3) having two parallel broadsides (4) and four narrow sides (5 to 8),
- at least two alternately cam-controlled poppet valves (13, 26) for the liquid and the gas, which poppet valves are arranged in said valve block,
- a first prismatic distributor bar (9) which is screwed to a narrow side (8) of the valve block (1; 2, 3),
- a second prismatic distributor bar (10) which is screwed to a parallel narrow side (7) of the valve block (1; 2, 3),
- a gas connection (23, 25) for a first poppet valve (13),
- a gas duct from the first poppet valve (13) to the first distributor bar (10),
- a liquid connection (27) for the second poppet valve (26),
- a liquid duct (28) to the first distributor bar (9),
- non-return valves (36) in the gas duct (24) and in a liquid duct (28),
- a distributor duct (37) in the first distributor bar (9) that is connected to the gas duct (24) and the liquid duct (28),
- connections (38) on the distributor duct (37) in the first distributor bar (9), for inlets (40) to one or more moulds (11, 12),
- a distributor duct (49) in the second distributor bar (10),
- connections (50) on the distributor duct (49) in the second distributor bar (10), for outlets (51) from one or more moulds (11, 12),
- a common flow-off (52) from the distributor duct (49) in the second distributor bar (10).

2. Device according to claim 1, characterised in that the first and second poppet valves (13, 26) are arranged in the valve block (1; 2, 3) in a manner such that they are at an angle of 90° with respect to each other, and a common cam control element (29, 30, 31) is arranged at the point of intersection of the axes of the poppet valves (13, 26).

3. Device according to claim 1 or 2,characterised in that each poppet valve (13, 26) has a roller-type cam follower (15, 16) and the control cam (30) has at least one locking indentation (31) which acts together with the roller-type cam followers (15, 16).

4. Device according to claim 1, 2 or 3, characterised in that the locking indentation (31) is arranged in the cam tip.

5. Device according to one of the claims 1 to 4, characterised in that the cam (30) is arranged on a shaft (29) which is mounted in the valve block (1; 2, 3), an actuating lever (43) is secured to an end which is led through a retaining washer (41), the retaining washer (41) is secured in the valve block (1; 2, 3) by means of a snap ring (42), and arranged in the valve block (1; 2, 3) is a groove (33) which acts together with a pin (32) on the cam (30) and fixes the end positions of the cam (30).

6. Device according to one of the claims 1 to 5, characterised in that the gas connection (23) for the first poppet valve (13) is arranged on a narrow side (6) of the valve block (2) that is parallel to said poppet valve (13), the gas duct (24) leads to a narrow side (8) at right angles thereto, arranged in this narrow side (8) are also the liquid connection (27) and the liquid duct (28) for the second poppet valve (26), and the first distributor bar (9) is screwed to this narrow side (8) in a gas-tight and liquid-tight manner.

7. Device according to one of the claims 1 to 6, characterised in that arranged in the connections (50) in the second distributor bar (10) for the outlet (51) of one or more moulds (11, 12) are non-return valves (65).

8. Device according to claim 7, characterised in that the non-return valves (65) are arranged in a connection piece (70), which consists of transparent material or has a viewing window, and are used as flow indicators.

9. Device according to one of the claims 1 to 8, characterised by shut-off valves (39) arranged at the connections (38) in the first distributor bar (9) for the inlets (40) to one or more moulds (11, 12).

10. Device according to one of the claims 1 to 9, characterised by thermostatic valves (73) arranged in the connections (50) in the second distributor bar (10) for the outlets (51) from one or more moulds (11, 12).

11. Device according to one of the claims 1 to 10, characterised by thermometers (72) arranged in the connections (50) in the second distributor bar (10) for the outlets (51) from one or more moulds (11, 12).

12. Device according to one of the claims 1 to 11, characterised in that arranged in the first and second distributor bars (9, 10) are connections (44, 46) having shut-off valves (45) for a temperature stabilising liquid which is supplied to a temperature stabiliser (74).

13. Device according to one of the claims 1 to 12, characterised in that the first and second poppet valves (13, 26) are arranged in a first plane of the valve block (1; 2, 3), the distributor duct (37) of the first distributor bar (9) is connected in this plane to the gas duct (24) and the liquid duct (28), in that third and fourth poppet valves (55, 56) are arranged in a second plane which is parallel to the first plane, the common flow-off (52) from the distributor duct (49) in the second distributor bar (10) opens out in the second plane in a duct (57, 58) which leads to the third and fourth poppet valves (55, 56), a liquid/gas connection (59) for the third poppet valve (55) is provided, and the cam control element of the four poppet valves (13, 26, 55, 56) is coupled in such a way that in a first position liquid passes through the opened first poppet valve (13) into the first distributor bar (9), from there via the mould (11, 12) or moulds into the second distributor bar (10), from there via the opened third poppet valve (55) into a liquid circuit (74, 75, 76, 77), that in a second position compressed gas passes through the opened second poppet valve (26) into the first distributor bar (9), from there via the mould (11, 12) or moulds into the second distributor bar (10), from there via the opened fourth poppet valve (56) to an outlet (61) and thereby expels the liquid from the mould (11, 12) or moulds.

14. Device according to claim 13, characterised in that the third and fourth poppet valves (55, 56) are arranged in the valve block (3) in a manner such that they are at an angle of 90° with respect to each other, a common cam control element (63, 64) is arranged at the point of intersection of the axes of the poppet valves (55, 56), and the cam control elements (29, 30, 31; 63, 64) for the first and second and also third and fourth poppet valves (13, 26, 55, 56) are positively coupled.

15. Device according to claim 14, characterised in that a cam (64) is mounted on a shaft (63) at the point of intersection of the axes of the third and fourth poppet valves (55, 56) and the shafts (29, 63) for the first and second and also third and fourth poppet valves (13, 26, 55, 56) are coupled with each other in a manner such that they can be pushed together in a form-locking manner (transverse groove 81, transverse wedge 82).

16. Device according to claim 13, 14 or 15, characterised in that the distributor bars (9, 10) have a width which corresponds to half the width of the valve block, the distributor bar (9) is screwed underneath the valve block (1; 2, 3) in the region of the first plane and the second distributor bar (10) is screwed on the valve block (1; 2, 3) in the region of the second plane, and the liquid connection (59) for the third poppet valve (55) is arranged underneath the valve block (1; 2, 3) next to the first distributor bar (9) and the liquid/gas connection (61) is arranged on a narrow side (6) of the valve block (1; 2, 3) that is perpendicular thereto.

17. Device according to one of the claims 13 to 16, characterised in that the valve block (1) consists of two valve block units (2, 3) which are screwed together and are the same shape and in each case accommodate the first and second poppet valves (13, 26) in the first plane and the third and fourth poppet valves (55, 56) in the second plane.

## Revendications

1. Dispositif pour introduire au choix un liquide ou un gaz sous pression dans des moules pour la transformation de matières plastiques caractérisé par
- un bloc-soupapes (1 ; 2, 3) parallélépipédique avec deux grandes faces (4) parallèles et quatre petites faces (5 à 8),
- au moins deux soupapes à disque (13, 26) disposées à l'intérieur, actionnées alternativement par des cames pour le liquide et le gaz,
- un premier rail de distribution (9) prismatique, vissé avec une petite face (8) du bloc-soupapes (1 ; 2, 3),
- un deuxième rail de distribution (10) prismatique, vissé avec une petite face (7) parallèle du bloc-soupapes (1 ; 2, 3),
- un branchement de gaz (23, 35) pour une première soupape à disque (13),
- un conduit de gaz de la première soupape à disque (13) au premier rail de distribution (10),
- un branchement de liquide (27) pour la deuxième soupape à disque (26),
- un conduit de liquide (28) vers le premier rail de distribution (9),
- des clapets de non-retour (36) dans le conduit de gaz (24) et un conduit de liquide (28),
- un conduit de distribution (37), relié au conduit de gaz (24) et au conduit de liquide (28), dans le premier rail de distribution (9),
- des branchements (38) pour des arrivées (40) vers un ou plusieurs moules (11.2) sur le conduit de distribution (37) dans le premier rail de distribution (9),
- un conduit de distribution (49) dans le deuxième rail de distribution (10),
- des branchements (50) pour départs (51) d'un ou plusieurs moules (11, 12) sur le conduit de distribution (49) dans le deuxième rail de distribution (10),
- une évacuation (52) commune à partir du conduit de distribution (49) dans le deuxième rail de distribution (10).

2. Dispositif selon la revendication 1, caractérisé en ce que la première et la deuxième soupapes à disque (13, 26) sont placées dans le bloc-soupapes (1 ; 2, 3), sous un angle de 90° l'une par rapport à l'autre, et un actionnement à cames (29, 30, 31) commun est placé au point d'intersection de l'axe des soupapes à disque (13, 26).

3. Dispositif selon la revendication 1 ou 2, caractérisé en ce que chaque soupape à disque (13, 26) présente un poussoir à galet (15, 16) et la came d'actionnement (30) présente au moins un creux d'arrêt (31) coopérant avec les poussoirs à galet (15, 16).

4. Dispositif selon les revendications 1, 2 ou 3, caractérisé en ce que le creux d'arrêt (31) est situé dans la pointe de la came.

5. Dispositif selon l'une des revendications 1 à 4, caractérisé en ce que la came (30) est placée sur un arbre (29) monté dans le bloc-soupapes (1 ; 2, 3), un levier d'actionnement (43) est fixé à une extrémité passant par un disque de blocage (41), le disque de blocage (41) est bloqué dans le bloc-soupapes (1 ; 2, 3) au moyen d'un jonc (42) et dans le bloc-soupapes (1 ; 2, 3) est pratiquée une rainure (33) coopérant avec une tige (32) sur la came (30) et définissant les positions de fin de course de la came (30).

6. Dispositif selon l'une des revendications 1 à 5, caractérisé en ce que le branchement de gaz (23) pour la première soupape à disque (13), est placé sur une petite face (6), parallèle à cette soupape à disque (13), du bloc-soupapes (2), le conduit de gaz (24) mène à une petite face (8) perpendiculaire à celui-ci, dans cette petite face (8) sont placés aussi le branchement de liquide (27) et le conduit de liquide (28) pour la deuxième soupape à disque (26) et le premier rail de distribution (9) est vissé, de manière étanche aux gaz et aux liquides, avec cette petite face (8).

7. Dispositif selon l'une des revendications 1 à 6, caractérisé en ce que dans les branchements (50) dans le deuxième rail de distribution (10), sont placés des clapets de non-retour (65) pour le départ (51) à partir d'un ou plusieurs moules (11, 12).

8. Dispositif selon la revendication 7, caractérisé en ce que les soupapes à disque de non-retour (65) sont placées dans une pièce de branchement (70) en matériau transparent ou avec un regard et servent d'indicateur de débit.

9. Dispositif selon l'une des revendications 1 à 8, caractérisé par des soupapes d'arrêt (39) placées sur les branchements (38) dans le premier rail de distribution (9) pour les arrivées (40) vers un ou plusieurs moules (11, 12).

10. Dispositif selon l'une des revendications 1 à 9, caractérisé par des soupapes thermostatiques (73) placées dans les branchements (50) dans le deuxième rail de distribution (10), pour les départs (51) à partir d'un ou plusieurs moules (11, 12).

11. Dispositif selon l'une des revendications 1 à 10, caractérisé par des thermomètres (72) placés dans les branchements (50), dans le deuxième rail de distribution (10) pour les départs (51) à partir d'un ou plusieurs moules (11, 12).

12. Dispositif selon l'une des revendications 1 à 11, caractérisé en ce que dans le premier et deuxième rails de distribution (9, 10) sont placés des branchements (44, 46) avec des soupapes d'arrêt (45) pour un liquide d'équilibrage de température, envoyé à un appareil d'équilibrage de température (74).

13. Dispositif selon l'une des revendications 1 à 12, caractérise en ce que la première et la deuxième soupapes à disque (13, 26) sont placées dans un premier plan du bloc-soupapes (1 ; 2, 3), le canal de distribution (37) du premier rail de distribution (9) est relié dans ce plan au conduit de gaz (24) et au conduit de liquide (28), en ce qu'une troisième et une quatrième soupapes à disque (55, 56) sont placées dans un deuxième plan, parallèle au premier, l'évacuation (52) commune du conduit de distribution (49) débouche dans le deuxième rail de distribution (10) dans le deuxième plan, dans un conduit (57, 58), menant à la troisième et à la quatrième soupapes à disque (55, 56), un branchement de liquide/branchement de gaz (59) est prévu pour la troisième soupape à disque (55) et l'actionnement à cames des quatrièmes soupapes à disque (13, 26, 55, 56) est accouplé de manière que dans une première position, le liquide parvient, par la première soupape à disque (13) ouverte, dans le premier rail de distribution (9), de là, par le moule (11, 12) ou les moules, dans le deuxième rail de distribution (10), de là, par la troisième soupape à disque (55) ouverte, dans un circuit de liquide (74, 75, 76, 77), en ce que dans une deuxième position le gaz sous pression parvient par la deuxième soupape à disque (26) ouverte dans le premier rail de distribution (9), de là, par le moule (11, 12) ou les moules, dans le deuxième rail de distribution (10), de là, par la quatrième soupape à disque (56) ouverte, vers une évacuation (61) et ce faisant chasse le liquide du moule (11, 12) ou des moules.

14. Dispositif selon la revendication 13, caractérisé en ce que la troisième et la quatrième soupapes à disque (55, 56) sont placées dans le bloc-soupapes (3), sous un angle de 90° l'une par rapport à l'autre, un actionnement à cames (63, 64) commun est placé au point d'intersection des axes des soupapes à disque (55, 56) et les actionnements à cames (29, 30, 31 ; 63, 64) pour la première et la deuxième ainsi que pour la troisième et la quatrième soupapes à disque (13, 26, 55, 56) sont accouplés par force.

15. Dispositif selon la revendication 14, caractérisé en ce qu'une came (64) est montée sur un arbre (63), au point d'intersection des axes de la troisième et de la quatrième soupapes à disque (55, 56) et les arbres (29, 63) pour la première et la deuxième ainsi que pour la troisième et la quatrième soupapes à disque (13, 26, 55, 56), peuvent être accouplés entre eux, par emboîtement par concordance de forme (rainure transversale 81, clavette transversale 82).

16. Dispositif selon les revendications 13, 14 ou 15, caractérisé en ce que les rails de distribution (9, 10) présentent une largeur correspondant à la moitié de la largeur du bloc-soupapes, le rail de distribution (9) est vissé sous le bloc-soupapes (1 ; 2, 3) dans la zone du premier plan et le deuxième rail de distribution (10) est vissé sur le bloc-soupapes (1 ; 2, 3), dans la zone du deuxième plan, et le branchement de liquide (59) pour la troisième soupape à disque (55) est placé sous le bloc-soupapes (1 ; 2, 3), a côté du premier rail de distribution (9) et le branchement de liquide/gaz (61) est placé sur une petite face (6), perpendiculaire à ceux-ci, du bloc-soupapes (1 ; 2, 3).

17. Dispositif selon l'une des revendications 13 à 16, caractérisé en ce que le bloc-soupapes (1) est constitué de deux unités de bloc-soupapes (2, 3) de même forme et vissés entre eux, recevant chacun la première et la deuxième soupapes à disque (13, 26) dans le premier plan ainsi que la troisième et la quatrième soupapes à disque (55, 56) dans le deuxième plan.
